# EUROPÄISCHE PATENTSCHRIFT

(11) **EP 0 575 957 B1**
(45) Veröffentlichungstag und Bekanntmachung des Hinweises auf die Patenterteilung: **18.10.1995**
(21) Anmeldenummer: 93109944.4
(22) Anmeldetag: 22.06.1993
(51) Int. Cl.: C03C 27/12, B32B 17/10, E04C 2/54, E04D 3/06

(54) **Verbundglas**
Laminated glass
Verre feuilleté

(30) Priorität: 23.06.1992 DE 4220457
(43) Veröffentlichungstag der Anmeldung: 29.12.1993
(73) Patentinhaber: BISCHOFF GLASTECHNIK GmbH & Co. KG, D-75015 Bretten (DE)
(72) Erfinder: Kaufmann, Gerd Bischoff, D -75015 Bretten (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- DE-A- 1 659 251
- DE-A- 4 006 709
- FR-A- 794 291

## Beschreibung

Die Erfindung betrifft ein Verbundglas mit mehreren Lagen von mit ihren Flachseiten aufeinanderliegenden Einzelglasscheiben, die durch hochelastische organische Zwischenschichten verbunden sind.

Es ist Sicherheitsglas in Form von Verbundglas bekannt. Hierbei sind jeweils zwei oder drei Einzelglasscheiben mit zumindestens identischer Länge und Breite genau fluchtend aufeinandergefügt, wobei zwischen den Einzelscheiben eine Verbindungsschicht aus hochelastischem organischem Material wie Polyvinylbutyl, Celluloseacetat, Polymerisaten der Acrylverbindungen, Vinylacetyl oder Polyvinylbutyral angeordnet sind. Gegen Einscheibensicherheitsglas wird solches Verbundsicherheitsglas verwendet, damit, wenn die Glasscheiben zerstört oder beschädigt werden, sie nicht aus ihrer Ebene heraus- bzw. herunterfallen und Personen verletzen können; auch in diesem Falle werden die Glaseinzelteile durch die hochelastische Zwischenschicht gehalten, so daß sie nicht herunterfallen können.

Daneben ist entsprechendes Verbundglas mit bis zu drei Lagen aus starken Einzellagen als Panzerglas bekannt und weist eine gute Schuß- bzw. Schlagfestigkeit auf. Tragwerksfunktion können solche Verbundglasscheiben aber nicht übernehmen; sie müssen vielmehr in herkömmlichen Rahmen und Tragwerken wie aus Holz, Metall oder Kunststoff bzw. Kunststoff-Metall-Verbundrahmen gehalten werden.

Der Erfindung liegt die Aufgabe zugrunde, Glaselemente zu schaffen, die im Tragwerksbau eigene Tragfunktion erfüllen können.

Erfindungsgemäß wird die genannte Aufgabe mit einem Verbundglas der eingangs genannten Art gelöst, welches dadurch gekennzeichnet ist, daß in jeder Lage mehrere Scheiben hintereinander, mit ihren Stößen an ihren Stirnseiten aneinander anschließend angeordnet sind und daß die Stöße in benachbarten übereinanderliegenden Lagen zueinander versetzt angeordnet sind.

Das erfindungsgemäße Verbundglas weist die wesentlichen Merkmale auf, daß in einer Glaslage mehrere Scheiben zumindestens in einer Erstreckungsrichtung hintereinander angeordnet sind und die sich ergebenden Stöße von Lage zu Lage versetzt angeordnet sind, also nicht miteinander fluchten. Hierdurch wird es möglich, Glaskonstruktionen zu schaffen, die Tragfunktion erfüllen und damit im Tragwerksbau eingesetzt werden können. Die erfindungsgemäßen Elemente sind Glasbinder, die als Binder, Sparren etc. als tragende Elemente eingesetzt werden können. Hierdurch sind frei austragende Konstruktionen, Vordächer, Wartehallen etc., bis auf Verbindungselemente ausschließlich aus Glas herstellbar. Darüber hinaus wird es möglich, Verglasungen nahezu beliebiger Länge herzustellen, wobei die Länge bestenfalls durch die Transportmöglichkeiten beschränkt ist, wobei diese auch überwunden werden können, indem bei vorgefertigten Elementen transportabler Länge unter Berücksichtigung der erfindungsgemäßen Merkmale solche transportablen Elemente am Ort miteinander zu einer langen Verglasung verbunden werden. In diesem Falle schließen die einzelnen Lagen im Verbindungsbereich zweier Elemente nicht auf einer Höhe ab, sondern ihre Stirnseiten bilden den Versatz, der ein Zusammenfügen mit den erfindungswesentlichen versetzten Stößen ermöglicht.

Das erfindungsgemäße Verbundglas kann dabei aus Lagen identischen Materials gleicher oder unterschiedlicher Stärke aufgebaut sein. Der Aufbau kann auch Lagen unterschiedlichen Glasmaterials aufweisen, wie Floatglas, Gußglas, Einfachglas (nicht vorgespannt), Einscheibensicherheitsglas, vollvorgespannt, teilvorgespannt und wärmeverfestigt oder chemisch vorgespannt. Die Gläser können vollsbändig transparent oder opak, ungefärbt oder farbig sein.

Gemäß einer bevorzugten Weiterbildung ist vorgesehen, daß die Stöße zwischen den Stirnseiten der Scheiben ebenfalls mit elastischem Kunststoffmaterial gefüllt sind. Hierbei kommen die oben genannten Kunststoffe in Frage.

Während in bevorzugter Ausgestaltung vorgesehen ist, daß das Verbundglas mindestens drei Glaslagen aufweist, sieht eine äußerst bevorzugte Ausgestaltung vor, daß es mindestens vier Glaslagen aufweist. Insbesondere wenn tragende Elemente geschaffen werden sollen, die als Binder, Sparren oder dergleichen eingesetzt werden, sieht die Erfindung eine Vielzahl von übereinander angeordneten Einzellagen vor. Derartige Elemente zeichnen sich weiter dadurch aus, daß die Erstreckungsrichtung des Verbundglases in einer Lage mit Stößen aneinander anschließender Scheiben wesentlich größer ist als seine Stärke oder Höhe in Richtung der Schichtung, wobei insbesondere die Erstreckung in der Ebene einer Lage mindestens das 15fache der Höhe in Richtung der Schichtung beträgt und/oder die Länge in Richtung mit ihren Stößen aneinander anschließender Scheiben wesentlich größer ist als die Breite, wobei insbesondere die Länge mindestens das 10fache der Breite beträgt.

Für großflächige Verglasungen sieht die Erfindung in bevorzugter Ausgestaltung vor, daß mehrere Einzelscheiben mit ihren Schmalrändern in beiden Richtungen der durch die Lagen bestimmten Ebenen nebeneinander angeordnet sind, wobei die Stöße von übereinanderliegenden Lagen in beiden Ebenenrichtungen zueinander versetzt angeordnet sind und Breite und Länge in der gleichen Größenordnung liegen, aber wesentlich größer als die Stärke oder Höhe sind.

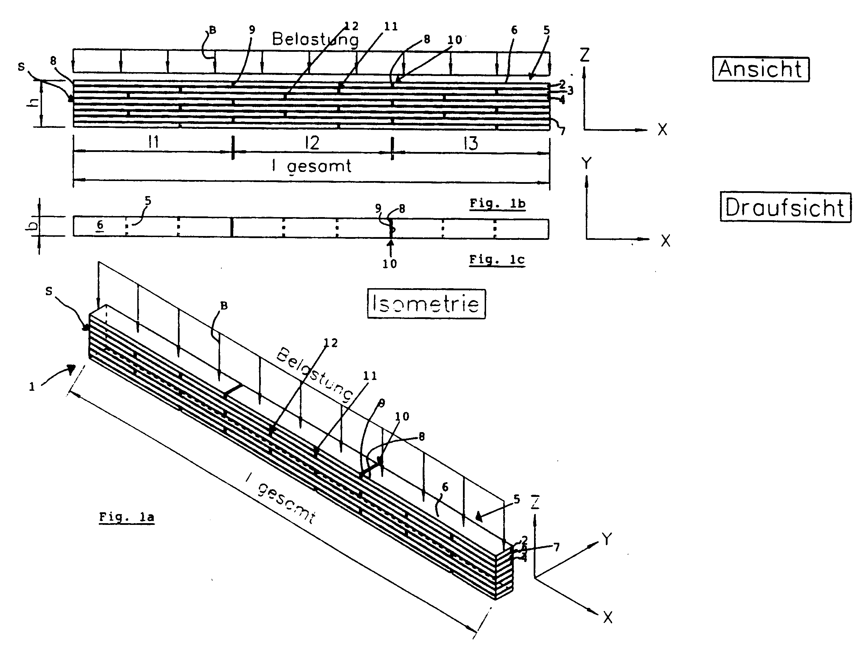

Weitere Vorteile und Merkmale der Erfindung ergeben sich aus den Ansprüche und aus der Beschreibung, in der Ausführungsbeispiele der Erfindung unter Bezugnahme auf die Zeichnung im einzelnen erläutert sind. Dabei zeigt bzw. zeigen:
- Figuren 1a-1c: eine erste Ausführungsform des erfindungsgemäßen Verbundglases in Form eines gestreckten Glasbinders zur Belastung senkrecht zu den Flachseiten der einzelnen Scheiben;
- Figuren 2a-2c: eine weitere Ausgestaltung des erfindungsgemäßen Verbundglases in Form eines Glasbinders mit Belastung auf eine Längsseite senkrecht zu den Stirnseiten der Einzelscheiben;
und
- Figuren 3a-3c: eine weitere Ausgestaltung eines erfindungsgemäßen Verbundglases mit versetzten Schichten zur Belastung senkrecht zu den Flachseiten der Einzelscheiben
Die in der Figur 1 dargestellte erste Ausführungsform eines erfindungsgemäßen Verbundglases in Form eines langgestreckten Glasbinders 1 weist eine Längserstreckung l auf, die wesentlich größer ist als die Quererstreckungen b und a des Binders 1. So beträgt die Länge l das 25fache der Breite b und das 10fache der Höhe des Binders und kann bis zu zwei Potenzen oder mehr der Werte b und h betragen.

Der erfindungsgemäße Binder 1 besteht aus mehreren Lagen 2, 3 von Glasscheiben 4, die mit ihren Flachseiten 6 aufeinanderliegen und übereinander angeordnet sind. Zwischen den Schichten 2, 4 befindet sich eine hochelastische organische oder Kunststoffzwischenschicht 7, wie sie bei herkömmlichem Verbundsicherheitsglas üblich ist, beispielsweise aus Celluloseacetat, Polymerisation von Acrylverbindungen, Vinylacetal oder Polyvinylbutyral. Die Verbindung der Glasscheiben-Lagen 2, 3 durch die Zwischenschicht 7 erfolgt in üblicher Weise.

Die Einzelscheiben 4 einer Lage stoßen mit Stirnseiten 8, 9 aneinander, wobei die Fuge 10 bzw. 11 ebenfalls mit einer hochelastischen organischen Zwischenschicht aus den genannten Materialien gefüllt sein kann. Die Stoßfugen 10, 11 zwischen Stirnseiten 8, 9 verschiedener Glasscheiben-Lagen 2, 3 sind zueinander versetzt, wobei der Versatz der Fugen 10, 11, 12 in den übereinanderliegenden Lagen 2, 3, 4 die Ausführungsform der Figur 1 um jeweils ein Drittel der Länge L1 bzw. L2 bzw. L3 der Einzelscheiben 5 erfolgt ist.

Im dargestellten Ausführungsbeispiel der Figur 1 besteht der Glasbinder 1 aus insgesamt acht Einzellagen 2 bis 4. Je nach Stärke der Einzelscheiben 5, nach Einsatz und Belastung können auch mehr oder weniger Lagen übereinander gebracht werden. Wesentlich ist für den erfindungsgemäßen Binder, daß mehrere Einzelscheiben zumindestens in einer Richtung senkrecht zu ihren Flachseiten 6 hinter- bzw. nebeneinander angeordnet sind und mehrere Lagen mit übereinanderliegenden Flachseiten 6 übereinander angeordnet sind, wobei die Stoßfugen 10, 11, 12 benachbarter Lagen jeweils versetzt zueinander angeordnet sind.

Für die in der Figur 1 dargestellte Ausgestaltung des erfindungsgemäßen Binders 1 sind dort Belastungspfeile B senkrecht auf die Flachseite 6 der Scheiben, also in Richtung der Schichtung der Lagen 2 bis 4 dargestellt. Der erfindungsgemäße Glasbinder 1 kann beispielsweise als Sparren oder auch als Träger eingesetzt werden, wobei im letztgenannten Falle eine Belastung auf die Stirnseiten S erfolgen würde.

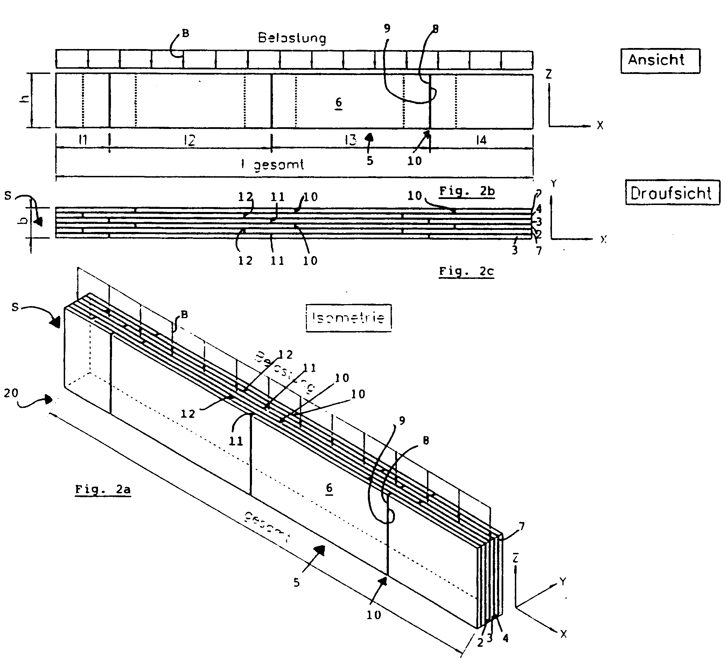

Der Aufbau des Glasbinders 20, wie er in den Figuren 2a bis 2b dargestellt ist, ist grundsätzlich der gleiche wie bei der Ausführung des Binders 1 bei der Ausführungsform der Figuren 1a bis 1c. Gleiche Elemente sind mit gleichen Bezugszeichen bezeichnet.

Die Länge l beträgt hier etwa das 15fache der Breite b' und etwa das 10fache der Höhe h'. Auch hier können größere Verhältnisse gewählt werden. Der Glasbinder der Figuren 2a bis 2c weist über seine Breite hin lediglich sechs Lagen 2, 3, 4 auf. Die Stöße 10, 11, 12 sind relativ zueinander um etwa ein Fünftel der Glasscheibe versetzt. Hierdurch ergibt sich das in den Figuren dargestellte Stoßbild. Zwischen zwei Lagen 3 mit genau übereinanderliegenden Scheiben 5, deren Stöße fluchten, sind die Stöße 10, 12 der jeweils benachbarten Zwischenlagen 2, 4 um etwa ein Fünftel der Länge der Scheibe in entgegengesetzten Richtungen gegeneinander versetzt.

Die Belastung erfolgt hier parallel zu den Flachseiten 6 der Scheiben 5 auf die Längskante des Binders 20. Es ist auch eine stirnseitige Belastung (auf Stirnseite S) möglich. Der Binder kann in der dargestellten Ausführungsform ebenfalls als Sparren, Träger oder dergleichen eingesetzt werden.

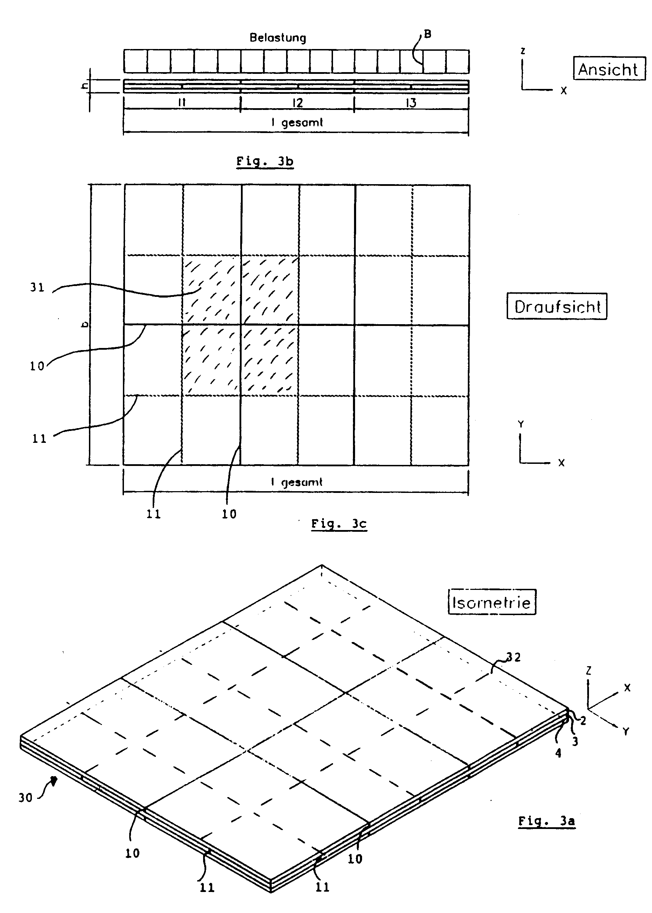

Während die Verbundgläser 1, 20 der Figuren 1 und 2 eine große Länge relativ zur Breite und Höhe aufwiesen, wobei also die Länge mindestens das 10fache der Breite bzw. Höhe, vorzugsweise mehr betrug, ist in der Figur 3 ein erfindungsgemäßes plattenförmiges Verbundglas dargestellt, bei dem also Länge und Breite in der Ebene der einzelnen Glaslagen 2, 3, 4 Abmessungen der gleichen Größenordnung haben, beide aber mindestens eine Zehnerpotenz größer als die Stärke oder Höhe der Verbundglasscheibe 30 in Richtung der Lagen sind.

Auch hier sind zwei benachbarte Lagen 2, 3 bzw. 3, 4 wieder derart versetzt, daß die Stöße 10 der Lage 2 (bzw. 4) und die Stöße 11 der Lage 3 nicht mehr ineinander fluchten, sondern relativ zueinander versetzt angeordnet sind. Der Versatz ist in jeder der Scheibenrichtungen um die Hälfte der Länge bzw. Breite der Einzelscheiben, die eine Lage 2 bzw. 3 bilden. Die Stösse der zweiten Lage 3 sind in der Figur 3c leicht gewellt dargestellt. Zur Veranschaulichung ist eine Scheibe 31 der Lage 3 gestrichelt gekennzeichnet, um zu zeigen, wie diese relativ zu den Einzelscheiben 32 der obersten Lage 2 versetzt angeordnet ist. Auch bei dieser Ausgestaltung einer erfindungsgemäßen Verbundglasscheibe sind die beiden wesentlichen Merkmale verwirklicht, daß nämlich jede Ebene oder Lage 2, 3, 4 aus mehreren Einzelscheiben besteht, die an Stirnseiten aneinander anstoßen und daß die Stöße mehrerer Lagen von Scheiben relativ zueinander versetzt angeordnet sind. Hierdurch wird nicht nur eine größere Festigkeit in Richtung der hier normalerweise gegebenen Belastung B gegenüber einer Einzelscheibe oder einer herkömmlichen Verbundglasscheibe geschaffen, sondern insbesondere auch eine größere Elastizität.

## Patentansprüche

1. Verbundglas mit mehreren Lagen von mit ihren Flachseiten aufeinanderliegenden Einzelglasscheiben, die durch hochelastische organische Zwischenschichten verbunden sind, dadurch gekennzeichnet, daß in jeder Lage (2, 3, 4) mehrere Scheiben hintereinander, mit ihren Stößen (10, 11, 12) an ihren Stirnseiten (8, 9) aneinander anschließend angeordnet sind und daß die Stöße (10, 11, 12) in benachbarten übereinanderliegenden Lagen (2 zu 3 bzw. 3 zu 4 bzw. 4 zu 2) zueinander versetzt angeordnet sind.

2. Verbundglas nach Anspruch 1, dadurch gekennzeichnet, daß die Stöße (10, 11, 12) zwischen den Stirnseiten (8, 9) der Scheiben ebenfalls mit elastischem Kunststoffmaterial gefüllt sind.

3. Verbundglas nach Anspruch 1 oder 2, dadurch gekennzeichnet, daß es mindestens drei Glaslagen (2, 3, 4) aufweist.

4. Verbundglas nach Anspruch 1 oder 2, dadurch gekennzeichnet, daß es mindestens vier Glaslagen (2, 3, 4) aufweist.

5. Verbundglas nach einem der vorangehenden Ansprüche, dadurch gekennzeichnet, daß seine Erstreckung in Richtung in einer Lage mit Stößen aneinander anschließender Scheiben wesentlich größer ist als seine Stärke oder Höhe (h) in Richtung der Schichtung.

6. Verbundglas nach Anspruch 5, dadurch gekennzeichnet, daß die Erstreckung in der Ebene einer Lage mindestens das 15fache der Höhe (h) in Richtung der Schichtung beträgt.

7. Verbundglas nach einem der vorangehenden Ansprüche, dadurch gekennzeichnet, daß die Länge in Richtung mit ihren Stößen aneinander anschließender Scheiben wesentlich größer ist als die Breite (b).

8. Verbundglas nach Anspruch 7, dadurch gekennzeichnet, daß die Länge (l) mindestens das 10fache der Breite (b) beträgt.

9. Verbundglas nach einem der Ansprüche 1 bis 6, dadurch gekennzeichnet, daß mehrere Einzelscheiben mit ihren Schmalrändern in beiden Richtungen der durch die Lagen bestimmten Ebenen nebeneinander angeordnet sind.

10. Verbundglas nach Anspruch 9, dadurch gekennzeichnet, daß die Stöße (10, 11) von übereinanderliegenden Lagen (2, 3 bzw. 3, 4) in beiden Ebenenrichtungen zueinander versetzt angeordnet sind.

11. Verbundglas nach Anspruch 9 oder 10, dadurch gekennzeichnet, daß Breite und Länge in der gleichen Größenordnung liegen, aber wesentlich größer als die Stärke oder Höhe sind.

## Claims

1. Laminated glass with several layers of individual glass plates, whose flat sides rest on one another and which are linked by highly elastic, organic intermediate layers, characterized in that in each layer (2, 3, 4) several plates are successively arranged with their joints (10, 11, 12) interconnecting at their front faces (8, 9) and that the joints (10, 11, 12) in adjacent superimposed layers (2 to 3 or 3 to 4 or 4 to 2) are displaced with respect to one another.

2. Laminated glass according to claim 1, characterized in that the joints (10, 11, 12) between the front faces (8, 9) of the plates are also filled with elastic plastic material.

3. Laminated glass according to claim 1 or 2, characterized in that it has at least three glass layers (2, 3, 4).

4. Laminated glass according to claim 1 or 2, characterized in that it has at least four glass layers (2, 3, 4).

5. Laminated glass according to one of the preceding claims, characterized in that its extension in the direction in a layer with joints of interconnecting plates is much greater than its thickness or height (h) in the direction of the lamination.

6. Laminated glass according to claim 5, characterized in that the extension in the plane of a layer is at least fifteen times the height (h) in the direction of the lamination.

7. Laminated glass according to one of the preceding claims, characterized in that the length in the direction of plates interconnected by their joints is much greater than the width (b).

8. Laminated glass according to claim 7, characterized in that the length (l) is at least ten times the width (b).

9. Laminated glass according to one of the claims 1 to 6, characterized in that several individual plates are arranged in juxtaposed manner with their narrow edges in both directions of the planes defined by the layers.

10. Laminated glass according to claim 9, characterized in that the joints (10, 11) of superimposed layers (2, 3 or 3, 4) are displaced with respect to one another in both plane directions.

11. Laminated glass according to claim 9 or 10, characterized in that the width and length are of the same order of magnitude, but much greater than the thickness or height.

## Revendications

1. Verre feuilleté formé de plusieurs couches de plaques de verre individuelles reposant l'une sur l'autre par leur face plane et solidarisées entre elles par des couches intermédiaires organiques de grande élasticité, caractérisé en ce que dans chaque couche (2,3,4) plusieurs plaques sont disposées l'une derrière l'autre, leurs bords (10,11,12) venant en contact avec leurs faces frontales (8,9), et en ce que les bords (10,11,12) de couches voisines superposées (2 et 3 ou 3 et 4 ou 4 et 5) sont disposés décalés les uns par rapport aux autres.

2. Verre feuilleté selon la revendication 1, caractérisé en ce que les bords (10,11,12) entre les parois frontales (8,9) sont également remplis de matière synthétique élastique.

3. Verre feuilleté selon l'une quelconque des revendications 1 ou 2, caractérisé en ce qu'il présente au moins trois couches de verre (2,3,4).

4. Verre feuilleté selon l'une quelconque des revendications 1 ou 2, caractérisé en ce que qu'il présente au moins quatre couches de verre (2,3,4).

5. Verre feuilleté selon l'une quelconque des revendications précédentes, caractérisé en ce que l'extension dans le sens de la couche des plaques de verre disposées en une couche et venant en contact par leurs bords est sensiblement plus importante que son épaisseur ou sa hauteur (h) dans le sens du feuilletage.

6. Verre feuilleté selon la revendication 5, caractérisé en ce que l'extension dans le plan d'une couche est au moins équivalente à 15 fois la hauteur (h) dans le sens du feuilletage.

7. Verre feuilleté selon l'une quelconque des revendications précédentes, caractérisé en ce que la longueur dans le sens des plaques de verre venant en contact l'une avec l'autre par leurs bords est sensiblement plus importante que la largeur (l).

8. Verre feuilleté selon la revendication 7, caractérisé en ce que la longueur (L) est au moins équivalente à 10 fois la largeur (l).

9. Verre feuilleté selon l'une quelconque des revendications 1 à 6, caractérisé en ce que plusieurs plaques de verre individuelles sont disposées côte à côte, leurs chants orientés dans les deux directions des plans déterminés par les couches.

10. Verre feuilleté selon la revendication 9, caractérisé en ce que les bords (10,11) de couches superposées (2,3 ou 3,4) sont disposés décalés les uns par rapport aux autres dans les deux directions de plan.

11. Verre feuilleté selon l'une quelconque des revendications 9 ou 10, caractérisé en ce que la largeur et la longueur sont du même ordre de grandeur, mais sensiblement plus importantes que l'épaisseur ou la hauteur.
